# EUROPEAN PATENT SPECIFICATION

(11) **EP 3 087 849 B1**
(45) Date of publication and mention of the grant of the patent: **23.10.2019**
(21) Application number: 14873279.5
(22) Date of filing: 19.12.2014
(51) Int. Cl.: A23L 27/10, A23L 27/12, A23L 2/00, A23L 2/64, B01D 3/38, C11B 9/00

(54) **METHOD FOR RECOVERING PREFERABLE AROMA FROM BIOMATERIAL**
VERFAHREN ZUR RÜCKGEWINNUNG VON BEVORZUGTEN AROMEN AUS BIOMATERIAL
PROCÉDÉ DE RÉCUPÉRATION D'UN ARÔME SOUHAITÉ À PARTIR D'UN BIOMATÉRIAU

(30) Priority: 27.12.2013 JP 2013273318
(43) Date of publication of application: 02.11.2016
(73) Proprietor: Suntory Holdings Limited, Osaka-shi, Osaka 530-8203 (JP)
(72) Inventor: YOKOYAMA, Akiyuki, Osaka-shi Osaka 552-0022 (JP); URABE, Hiroyuki, Osaka-shi Osaka 552-0022 (JP)
(74) Representative: Vossius & Partner Patentanwälte Rechtsanwälte mbB
(86) International application number: PCT/JP2014/083692
(87) International publication number: WO 2015/098744

(56) References cited:
- WO-A1-2007/083812
- CA-A1- 2 839 041
- JP-A- H0 873 886
- JP-A- H10 286 063
- JP-A- 2002 356 696
- JP-A- 2006 517 140
- JP-A- 2007 321 017
- JP-A- 2012 005 419
- JP-A- 2012 005 419
- JP-A- 2012 056 894
- JP-A- 2012 056 894
- JP-A- 2013 226 076
- MIRKO FILAJDIC ET AL: "Gas-chromatographic determination of volatile constituents in Yugoslav plum brandies", JOURNAL OF THE SCIENCE OF FOOD AND AGRICULTURE, vol. 24, no. 7, July 1973 (1973-07), pages 835-842, XP055392913, GB ISSN: 0022-5142, DOI: 10.1002/jsfa.2740240712

## Description

### TECHNICAL FIELD

The present invention relates to a method for selectively recovering favorable aromas from biological ingredients. More particularly, this invention relates to a method for selectively recovering favorable aromas from plant or animal biological ingredients with the use of steam distillation. This invention also relates to an apparatus that can be used in said method.

### BACKGROUND ART

There have been reported various methods for recovering aroma components contained in biological ingredients.

For example, there was a report of an aroma capturing method comprising: heating a food ingredient to generate an aroma component; delivering the aroma component by a carrier gas; and passing the aroma component delivered with the carrier gas through dissolving and capturing solutions to dissolve and capture the aroma component (Patent Literature 1).

Also known was an extraction method which makes it possible to recover a required aroma component contained in an aroma component-containing ingredient like coffee beans without damaging said aroma component, the extraction method which comprises extracting a volatile component through steam distillation (*e.g*.. Patent Literature 2).

Steam distillation is known as a traditional distillation method. It is well known that various modes of steam distillation are available, such as: a mode in which a solid ingredient is placed on a net rack or the like and steam is blown onto the surface of the ingredient, while the ingredient is kept not immersed in a liquid, whereby a hardly-volatile component is recovered (also called solid distillation) (*e.g.*, Patent Literature 3); and a mode in which steam is directly blown onto an ingredient without using a net rack, like in the case of distillation for production of potato shochu and the like (also called direct distillation).

Further known was a plum spirits production method in which a fruit is first infused in neutral spirits, shochu, or the like for a certain period of time to obtain an infused liquor, as in the case of production of a plum liquor, and then the infused liquor is subjected to vacuum distillation (*e.g*., Patent Literature 4).

Patent Literature 5 relates to a method for producing a liquid aromatised with aroma compounds from chocolate, wherein a gas comprising aroma derived from cocoa or a cocoa-based product and water is condensed to provide a liquid aqueous phase and a gas phase; and the gas phase is subjected to pressurisation in the presence of an absorption liquid.

Patent Literature 6 discloses a volatile compound extraction device for extracting a volatile compound from a sample containing the volatile compound, wherein the device comprises a vapor-generating portion for generating a vapor not mixed with the volatile compound contained in the sample, a sample-storing portion which can store the sample and is used for ventilating the sample with a vapor generated in the vapor-generating portion, and a volatile compound extraction portion into which a gas mixture comprising the vapor and the volatile compound vaporized in the sample-storing portion by the ventilation can be introduced and which stores a solvent for the introduced volatile compound.

Patent Literature 7 discloses a tea extract obtained by adding a recovered solution to an extracted solution of distillate residues on which the steam distillation is performed.

Patent Literature 8 discloses a method to recover flavour components from aromatic beverages, such as coffee, comprising the generation of a gas containing flavour components by injection of an inert gas into an extractor,followed by the recovery of said flavours by contacting the gas containing flavour components with a solvent such as water or alcohol.

Non-Patent Literature 1 relates to the Gas-chromatographic determination of volatile constituents in Yugoslav plum brandies.

### CITATION LIST

### PATENT LITERATURES

Patent Literature 1: Japanese Patent Application Publication No. JP H04-252153
Patent Literature 2: Japanese Patent Application Publication No. JP 2011-515
Patent Literature 3: Japanese Patent Application Publication No. JP 2007-124906
Patent Literature 4: Japanese Patent Application Publication No. JP 2006-109799
Patent Literature 5: CA 2 839 041 A1
Patent Literature 6: JP 2012-56894 A
Patent Literature 7: JP 2012-5419 A
Patent Literature 8: JP H10 286063 A
Non-Patent Literature 1: Mirko Filajdic et al., Journal of the Science of Food and Agriculture, 1973, vol. 24(7), pp. 835-842.

### SUMMARY OF INVENTION

### TECHNICAL PROBLEM

As described above, various methods for recovering aroma components contained ingredients have been reported, but there is still a need to develop a method that makes it possible to selectively recover favorable aromas from biological ingredients. In addition, the present inventors found that in order to efficiently obtain any given type of characteristic or desired aroma component from a biological ingredient, it is not sufficient to merely perform distillation by a conventionally known method, with adjustments made to the conditions for the states of the biological ingredient and an infused liquor, steam feeding amount and method, degree of pressure reduction, and distillation temperature zone.

Thus, the present invention has as its object to provide a method that makes it possible to selectively recover a desired or characteristic aroma component from a biological ingredient in a more efficient way without recovering any unfavorable aroma component as much as possible. This invention can provide a method that makes it possible to efficiently recover a characteristic fresh and favorable aroma component from a biological ingredient, particularly if this ingredient is a fruit, without recovering any unfavorable aroma component as much as possible.

### SOLUTION TO PROBLEM

The present inventors have made intensive studies with a view to achieving the above-mentioned object, and as a result found that a surprising amount of a desired or characteristic aroma component can easily be selectively recovered from a biological ingredient, not only by recovering aroma by a conventional steam distillation method, but also by directing that part of aroma component, which passes through as a gas without being condensed at a cooling step of the distillation process, to a liquid-containing container, where gas-liquid contact is effected to recover that part of aroma component in the liquid. Thus, the inventors have completed the present invention.

More specifically, the present invention is as described in the appended claims.

### ADVANTAGEOUS EFFECTS OF INVENTION

By using the method of the present invention, favorable aromas of biological ingredients can be recovered selectively. Further, the favorable aromas of the biological ingredients can be imparted to various beverages including alcoholic beverages, and the like, by adding recovered liquids obtained by the inventive method to the beverages and the like.

### BRIEF DESCRIPTION OF DRAWINGS

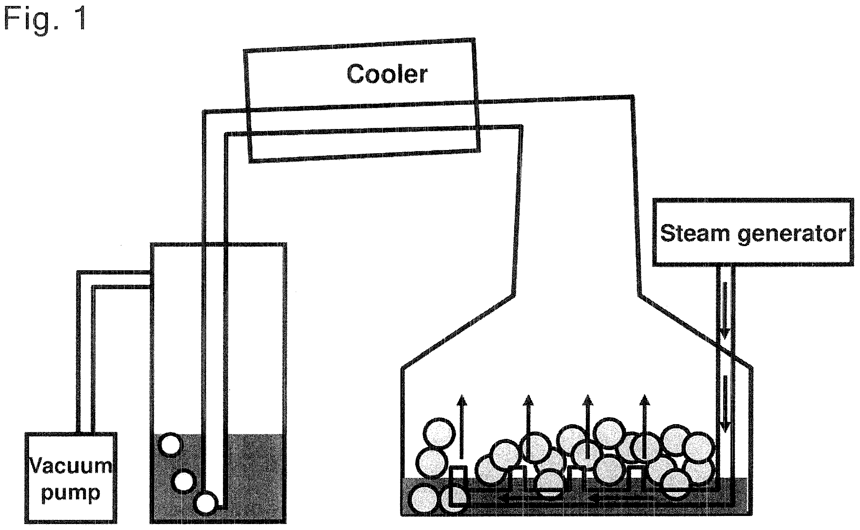

Fig. 1 shows a schematic diagram of a system used in working examples, which illustrates a state in which after steam is fed to a container containing a biological ingredient, the steam passes through a steam cooler, and until a distillate distills off, a gas containing an aroma of the biological ingredient (that part of aroma component which is not condensed by cooling) is transferred into a recovery liquid, in which bubbles are generated to recover the aroma gas by gas-liquid contact.

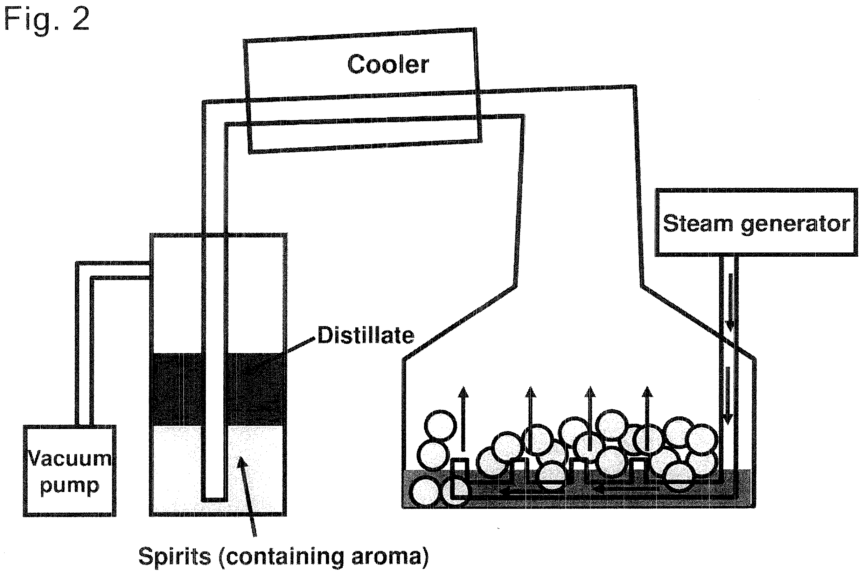

Fig. 2 shows a similar schematic diagram to that in Fig. 1, of a system used in working examples, which illustrates a time when, after a distillate distills off, the distillate and a solution charged in advance for recovering an aroma-containing gas are mixed in appropriate amounts, and thereupon distillation is stopped.

### DESCRIPTION OF EMBODIMENTS

The present invention is directed to a method for selectively recovering a favorable aroma from a biological ingredient, and more particularly to a method for selectively recovering a favorable aroma from a biological ingredient using steam distillation, as well as an apparatus for use in said method. When a recovered liquid obtained by said method is added to a beverage such as an alcoholic beverage, a beverage having a favorable aroma of a biological ingredient imparted thereto can be produced.

Hereunder, the present invention will be described in detail.

### <Method for recovering an aroma component>

Disclosed herein, and not part of the invention, is a method for recovering an aroma component from a biological ingredient comprising the steps of: feeding steam to a container containing the biological ingredient to contact the steam with the biological ingredient; cooling the steam passing through the container containing the biological ingredient; and directing that part of aroma component, which passes through as a gas without being condensed at the cooling step, to a liquid-containing container, where gas-liquid contact is effected to recover that part of aroma component in the liquid.

The present invention is characterized by comprising the step of directing that part of aroma component, which passes through as a gas without being condensed at the cooling step, to a liquid-containing container, where gas-liquid contact is effected to recover that part of aroma component in the liquid. There were known methods for recovering an aroma component by steam distillation, but no technique has hitherto been reported for simultaneously recovering, in a capture liquid, exhaustively all of the steam, moisture and gas generated by steam distillation.

The biological ingredient used in the present invention can be any ingredient regardless of the type -- it may be a plant ingredient or an animal ingredient. Examples include: fruits such as plum, orange, grapefruit, lemon, kiwi fruit, apple, peach, banana, grape, muscat, strawberry, cherry, mango, melon, water melon, passion fruit, pear, juniper berry, apricot, cassis, cranberry, blueberry, raspberry, and acerola; roots and barks such as perilla and cherry leaf; root crops; vegetables; roasted ingredients such as spice and coffee; plant ingredients in general; and animal ingredients such as chicken, beef, pork and mutton. The state of a biological ingredient is not limited: for example, the ingredient may be in a frozen, refrigerated or dry state; and the moisture content of the ingredient is also not limited. In the case of using plum, a fully-ripened plum is preferred because an aroma component can be recovered from that plum in a well-balanced state very similar to the favorable aroma which is perceived when one smells the plum directly; thus, this invention can be applied to all types of ingredients which *per se* have a favorable aroma.

The container to contain a biological ingredient is commonly a distillation still, and the volume of the container can be selected as appropriate depending on the amount of the biological ingredient to be used. For example, when the biological ingredient is used in an amount of 500 g, it is advisable to use a distillation still with a volume of about 1500 to 2500 mL. The higher the percentage of filling a container with a biological ingredient, the less waste is generated in the recovery of aroma. Further, when the filling percentage of a container is reduced and the height of the container is increased to thereby add a fractionation function in multiple rectifier stages, a rectification effect takes effect so that a favorable aroma of a biological ingredient can be recovered more selectively while unwanted aromas are further removed.

Before the step of feeding steam, the biological ingredient is immersed in advance in an alcohol, a hydrous alcohol, or water, and then steam is blown to start distillation. It is expected that when distillation is conducted in the presence of a small amount of a polar solvent such as alcohol, the polarity of a solution formed by condensation of steam decreases, thereby increasing the efficiency of recovering a low-polarity aroma component by distillation. Also, it is expected that when distillation is conducted in the presence of a low-boiling solvent such as alcohol, the temperature inside a distillation still further decreases, thereby reducing the generation of unwanted retort odor. Examples of the alcohol include ethanol, methanol, and propanol. Examples of the hydrous alcohol include hydrous ethanol, hydrous methanol, and hydrous propanol, with 1-95% hydrous ethanol being preferred, and 10-60% hydrous ethanol being more preferred.

Steam can be fed into a distillation still by using a steam generator. The steam can be fed into anywhere of the distillation still as long as the steam can be fully contacted with a biological ingredient, but it is preferable to feed steam to the bottom of the distillation still.

The rate of feeding steam is preferably in the range of about 0.2 to 2.0 mL/min per 100 g of biological ingredient. No favorable aroma component can be selectively recovered, either when the steam feed rate is too rapid or when the rate is too slow. If the steam feed rate is too rapid, the efficiency of contact between steam and an ingredient decreases, leading to a reduction in aroma recovery yield. In contrast, if the steam feed rate is too slow, the rate at which a distillate distills off decreases and thus the distillation time is prolonged, whereupon the aroma recovery yield from a biological ingredient is increased but at the same time unwanted retort odor becomes intense. In view of these facts, the steam feed amount can be adjusted to an appropriate level depending on the characteristics of a biological ingredient.

In one embodiment of the inventive method, recovery is stopped at the time when 100 mL of a liquid for aroma gas recovery and 100 mL of a distillate are mixed. However, the volumes of the liquid and distillate to be mixed can be changed as appropriate depending on various factors including the preference for the quality of flavor.

At the step of contacting steam with a biological ingredient, it is desirable to adjust the pressure inside a container to a pressure equal to or slightly lower than an atmospheric pressure; in particular, the internal pressure is in the range of 450 to 1013 hpa, preferably 600 to 1000 hpa, particularly preferably 700 to 950 hpa. By adjusting the pressure to be in such a range as mentioned above, a favorable aroma component can be recovered efficiently. As the pressure is reduced, unwanted retort odor can be reduced, but the temperature of a distillation still drops too low and thus the extraction yield of a favorable aroma from a biological ingredient decreases, eventually resulting in a decrease in recovery yield.

The steam transferred from a distillation still to a cooling step even includes steam generated by heating of condensed water from steam and a biological ingredient immersed in the condensed water by means of steam blown in from a steam generator.

A purpose of the cooling step is to cool and liquefy steam generated after contact between blown-in steam and a biological ingredient. However, it is not necessarily required that all the steam liquefy; and part of the steam may be transferred to a recovery step as it remains a vapor or gas.

As described above, the recovery step is characterized by directing steam to a liquid-containing container to recover a desired component. A capture liquid is preferably water, an alcohol, or a hydrous alcohol. The hydrous alcohol can be exemplified by hydrous ethanol, hydrous methanol, and hydrous propanol, with 20-90% hydrous ethanol being preferred, 35-70% hydrous ethanol being more preferred, and 36-45% hydrous ethanol being particularly preferred.

Since the recovery of aroma is based on the principle of the dissolution of a gas in a liquid by gas-liquid contact, it is advisable to make the temperature of a recovery liquid as low as possible. However, if even unwanted aromas are recovered at a low temperature, adjustment may also be made by, for example, deliberately increasing the temperature of a recovery liquid so as to selectively recover a desired aroma. Further, at the aroma recovery step, as measures for increasing gas-liquid contact area to enhance gas-liquid contact efficiency, various improvements may be made, such as decreasing the size of bubbles formed by bubbling, using a gas-liquid contact conductor, or stirring a solution -- such improvements can be expected to enhance the efficiency of recovering an aroma component.

In a recovered liquid, a favorable aroma component is recovered efficiently and selectively, whereas an unfavorable component is present only in trace amounts. For example, in the case of using plum, a fruit aroma component such as hexanoic acid ethyl ester is recovered in large amounts, whereas the amount of furfural, a component causative of retort odor, is low. In the case of using a lemon fruit, a fruit component such as limonene is recovered in large amounts, whereas an unwanted grassy aroma is present only in trace amounts. According to the aroma component recovery method of the present invention, when, for example, a plum fruit is used as an ingredient, there can be obtained a recovered liquid comprising furfural and hexanoic acid ethyl ester, wherein the recovered liquid satisfies the requirement that the ratio of the GC area value of furfural to the GC area value of hexanoic acid ethyl ester be not less than 0.008 and not more than 0.039 (it should be added that these area values are calculated based on the results of analysis under the following MS conditions: quadrupole setting: 150 and ion source setting: 230, and under the following area value calculation conditions: total ion mode, mass (LOW): 35. and mass (HIGH): 550).

In the working examples given in the present specification, there was not used a distiller equipped with a net rack or a basket which can hold a solid ingredient. However, since the technical gist of the present invention resides in a combination of steam distillation and an aroma recovery step, the detailed mode of steam distillation is not limited, and a net rack or a basket can be used depending on the need. More specifically, combining an aroma recovery step with a mode of distillation which involves indirectly heating an ingredient, either from outside a distillation still like in the case of production of whiskey, etc., or across a wall inside a distillation still, is also effective similarly to combining with a mode of distillation, like steam distillation, which involves directly heating an ingredient.

### <Method for evaluating flavor>

Flavor can be analyzed by sensory evaluation. To cite an example, flavor can be evaluated by a plurality of trained expert panelists according to the following 7-point scale: 7 points for vary favorable, 6 points for favorable, 5 points for somewhat favorable, 4 points for neither favorable nor unfavorable, 3 points for somewhat unfavorable, 2 points for unfavorable, and 1 point for very unfavorable.

The recovered liquid can be analyzed for its components by gas chromatography. For example, in the case of using a plum as a fruit ingredient, the amount of hexanoic acid ethyl ester known as a fruit aroma component is quantified to use it as an aroma index. Further, the amount of furfural known as a negative component causative of retort odor is quantified to use it as an aroma index for the amount of a component which gives a negative rating. In the case of using a lemon, the amount of limonene known as a fruit component is quantified to use it as an aroma index.

### <Method for producing a beverage>

Since the liquid obtained by the above-described method is rich in a favorable aroma component and is low in unfavorable component, a beverage superior in flavor can be produced by adding the liquid to the beverage.

The beverage can be a non-alcoholic beverage or an alcoholic beverage. Examples of the beverage include fruit juice beverage, soymilk, milk beverage, processed milk, coffee beverage, cocoa beverage, tea beverage, carbonated drink, functional beverage, sports drink, nutritional drink, jelly beverage, beer, wine, *chuhai* (shochu-based beverage), liqueur, sake, shochu, whiskey, brandy, and soup. The present invention can be used for various purposes such as enhancing the flavor of not only beverages but also all types of foods like jelly.

As a food or beverage comprising an aroma component recovered from a plum fruit by steam distillation, there can be prepared a food or beverage comprising furfural and hexanoic acid ethyl ester, wherein the food or beverage satisfies the requirement that the ratio of the GC area value of furfural to the GC area value of hexanoic acid ethyl ester be not less than 0.008 and not more than 0.039 (it should be added that these area values are calculated based on the results of analysis under the following MS conditions: quadrupole setting: 150 and ion source setting: 230, and under the following area value calculation conditions: total ion mode, mass (LOW): 35, and mass (HIGH): 550).

### <Apparatus for recovering an aroma component>

The present invention is also directed to an apparatus that can be used in the inventive method. The inventive apparatus is an apparatus for recovering an aroma component from a biological ingredient, the apparatus comprising: a container to contain the
biological ingredient, wherein part or all of the biological ingredient has been immersed in an alcohol or a hydrous alcohol and
wherein the pressure inside the container is in the range of from 450 to 1013 hpa;
a steam generator for generating steam to be fed to the container; a
cooling section for cooling the steam passing through the container to contain the biological ingredient, or steam generated in the container; and a recovery container in which an aroma component-containing gas passing through without being condensed in the cooling section can be subjected to gas-liquid contact to recover the aroma component in a liquid.

The container to contain a biological ingredient is a container having a sufficient volume to hold a specified amount of the biological ingredient and capable of withstanding reduced pressure. Since the inventive method involves steam distillation, the inventive apparatus has a steam generator. Steam generated in the steam generator is fed to a steam container. The inventive apparatus further has a cooling section for cooling the steam coming from the container. In the cooling section, the steam passing through a section charged with a biological ingredient, or steam generated by heating the biological ingredient and condensed water are cooled and liquefied. However, it is not necessarily required that all the steam liquefy; and part of the steam may be transferred to a recovery container as it remains a vapor or gas.

The recovery container is charged with a capture liquid. The capture liquid is preferably water, an alcohol, or a hydrous alcohol. The hydrous alcohol can be exemplified by hydrous ethanol, hydrous methanol, and hydrous propanol, with 20-90% hydrous ethanol being preferred, and 35-45% hydrous ethanol being more preferred. In a recovered liquid, a favorable aroma component is recovered efficiently and selectively, whereas an unfavorable component is present only in trace amounts.

### EXAMPLES

Hereunder, the present invention will be described more specifically by way of working examples. However, this invention is not limited to these examples.

### <Examples>

After the conditions for cooler temperature and a steam generator were established, a distillation still having an effective still volume of 2000 mL was charged with 500 g of a (frozen) fruit (fully-ripened Nanko plum) for sample Nos. 1 to 11, or with 500 g of a (frozen) fruit (lemon peels) for sample Nos. 12 and 13, and also a distillate receiver was charged with aroma recovery spirits.

Thereafter, the whole system including the distillation still and the distillate receiver was rendered in a reduced pressure state. Then, gas-liquid contact (bubbling) took place on the part of the distillate receiver to start the recovery of aroma contained in a gas. After the degree of reduced pressure was set to each of the levels specified in the below-mentioned conditions, steam was fed at each of the rates specified in said conditions (refer to Fig. 1). Until the temperature inside the distillation still reached a level equal to that of the steam, no distillate was produced, and an aroma-containing gas passed through a cooling step without being condensed and was transferred into hydrous ethanol or water placed in the distillate receiver, where gas-liquid contact was effected to recover an aroma component. Thereafter, a distillate was produced when the temperature of the distillation still reached a level equal to that of the steam. At the time when 100 mL of the distillate was produced, the distillation was stopped, and then there was obtained a solution in which 100 mL of the distillate was mixed with 100 mL of hydrous ethanol or water placed in advance (refer to Fig. 2). Such mixed solutions were each used as samples and subjected to sensory evaluation and aroma component analysis. As to sample No. 1 which was obtained without an aroma recovery step, 100 mL of a distillate was diluted with 100 mL of hydrous ethanol with an alcohol content of 40 degrees, and the resulting dilution was compared with each of sample Nos. 2 to 11 by sensory evaluation and aroma component analysis. As to sample No. 12, a distillate was diluted with 100 mL of water and the resulting dilution was compared with sample No. 13.

The above-described procedure was carried out for each of sample Nos. 1 to 13 under the conditions for container's internal pressure, steam feed rate, and the alcohol concentration of hydrous ethanol for recovery as shown in Table 1. Sample Nos. 1 and 12 are samples obtained in the system in which no bubbling took place by feeding a gas into a liquid for the purpose of aroma recovery. As to sample No. 11, distillation was started after an aqueous 30% ethanol solution had been added to the container in advance to immerse the fruit in this solution.

### [Distillation conditions]

Container's internal pressure setting: 1,013 (*i.e.,* normal pressure), 900, 600, 300 or 0 hpa
Steam feed rate: 0.2, 0.5 or 2.0 mL/min (per 100 g of fruit)
Cooler temperature: 10°C
Amount of distillate recovered: 100 mL

### [Solution for aroma recovery by gas-liquid contact]

Spirits (neutral)
Amount charged: 100 mL
Alcohol content: 36, 40 or 45 degrees

### [Sensory evaluation conditions]

The obtained samples were subjected to sensory evaluation by expert panelists.

The evaluation was conducted by a point rating system according to the following criteria.

| | |
|---|---|
| 7 points: | Very favorable |
| 6 points: | Favorable |
| 5 points: | Somewhat favorable |
| 4 points: | Neither favorable nor unfavorable |
| 3 points: | Somewhat unfavorable |
| 2 points: | Unfavorable |
| 1 point: | Very unfavorable |

### [Aroma component analysis conditions]

### - Analyzer:

Gas chromatography system (Agilent GC-MSD)

### - GC oven temperature condition:

40°C (for 5 min), increased at 6°C/mm to 240°C

### - MS conditions:

Quadrupole setting: 150, ion source setting: 230
Area value calculation conditions:
   Total ion mode, mass (LOW): 35, and mass (HIGH): 550

### - Column:

DB-WAXETR, 60 m × 320 µm ID × 0.25 µm film thickness

### - Sample pretreatment condition:

80 µL of a sample and 20 µL of an internal standard material (aqueous alcohol solution of 20 ppm of decanoic acid methyl ester) were mixed in a 20 mL screw cap vial.

### - Dynamic headspace conditions:

System: GERSTEL MPS
Adsorbent: TENAX
Sample gasification temperature: 80°C
Feed amount of sample gasification gas: 3000 mL
Feed rate of sample gasification gas: 100 mL/min
Type of sample gasification gas: Nitrogen

### - Peak retention time:

The components of fruit aroma and retort odor were identified by MS analysis.

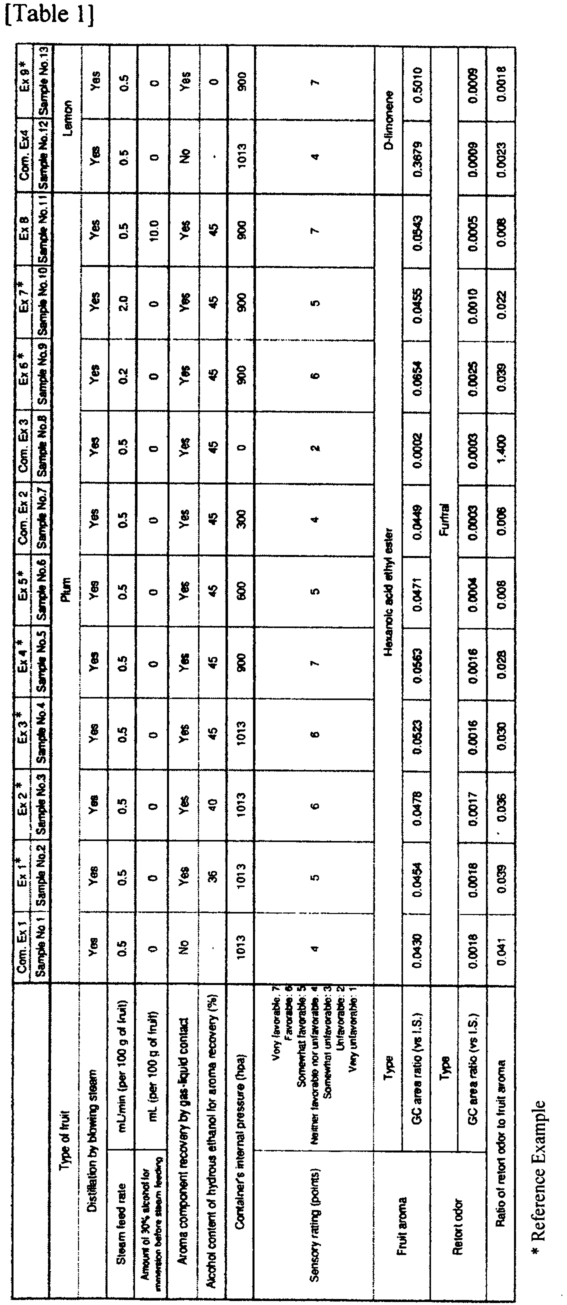

Comprehensively judging from the results of sensory evaluation and aroma component analysis, a low rating was given to sample No. 1 obtained in the system which did not include an additional step of directing that part of aroma component, which passed through as a gas without being condensed at the cooling step, to the liquid-containing container, where gas-liquid contact is effected to recover that part of aroma component in the liquid. In contrast, a high rating was given to the samples obtained in the system which included the additional step of effecting gas-liquid contact to recover the aroma component in the liquid.

Also, as regards the concentration of a recovery alcohol, a more satisfactory rating was obtained at a concentration of 40-45% than at a concentration of 36%.

With regard to the container's internal pressure at the steam-fruit contact step, a better rating was obtained in the systems having an internal pressure equal to or slightly lower than an atmospheric pressure.

Further, with regard to steam feed rate, an excellent rating was obtained at a rate of from 0.2 to 2.0 mL/min, particularly 0.5 mL/min, per 100 g of fruit.

The sample obtained through feeding steam onto a fruit which had been immersed in advance in an aqueous 30% ethanol solution was rated 7 points, which is excellent along with other 7-point rated samples.

Similar results were observed for sample Nos. 12 and 13 which were obtained using a lemon fruit in place of a plum fruit.

### INDUSTRIAL APPLICABILITY

By using the method of the present invention, favorable aromas of biological ingredients can be recovered selectively. Further, the favorable aromas of the biological ingredients can be imparted to various beverages including alcoholic beverages, and the like, by adding recovered liquids obtained by the inventive method to the beverages and the like.

## Claims

1. A method for recovering an aroma component from a biological ingredient, the method comprising the steps of:
feeding steam to a container containing the biological ingredient to contact the steam with the biological ingredient;
cooling the steam coming from the container containing the biological ingredient; and
directing the cooled steam and a liquid generated by cooling to a liquid-containing container to recover the aroma component,
and further comprising, before the step of feeding the steam to the container containing the biological ingredient, the step of immersing part or all of the biological ingredient in an alcohol or a hydrous alcohol,
wherein the pressure inside the container is in the range of from 450 to 1013 hpa.

2. A method for producing a beverage having an aroma of a biological ingredient, the method comprising the steps of:
feeding steam to a container containing the biological ingredient to contact the steam with the biological ingredient;
cooling the steam coming from a section charged with the biological ingredient;
directing the cooled steam and a liquid generated by cooling to a liquid-containing container to recover the aroma component; and
adding the obtained aroma component-containing liquid to a beverage,
and further comprising, before the step of feeding the steam to the container containing the biological ingredient, the step of immersing part or all of the biological ingredient in an alcohol or a hydrous alcohol,
wherein the pressure inside the container is in the range of from 450 to 1013 hpa.

3. The method according to claim 1 or 2, further comprising, before the step of feeding the steam to the container, the step of immersing part or all of the surface of the biological ingredient in an alcohol, a hydrous alcohol, or water.

4. The method according to any one of claims 1 to 3, wherein at the step of contacting the steam with the biological ingredient inside the container, part or all of the surface of the biological ingredient is immersed by condensed water from the fed steam.

5. The method according to any one of claims 1 to 4, wherein the steam is fed to the bottom of the container containing the biological ingredient.

6. The method according to any one of claims 1 to 5, wherein the steam is fed at a rate of from 0.2 to 2.0 mL/min per 100 g of the biological ingredient.

7. The method according to any one of claims 1 to 6, wherein the liquid used at the aroma component recovery step is an alcohol, a hydrous alcohol, or water.

8. The method according to claim 7, wherein at the aroma component recovery step, the aroma component is recovered by gas-liquid contact.

9. The method according to any one of claims 1 to 8, wherein the biological ingredient is a fruit.

10. The method according to claim 9, wherein the fruit is a plum fruit or a lemon fruit.

11. An apparatus for recovering an aroma component from a biological ingredient, the apparatus comprising:
a container to contain the biological ingredient, wherein part or all of the biological ingredient has been immersed in an alcohol or a hydrous alcohol, and
wherein the pressure inside the container is in the range of from 450 to 1013 hpa;
a steam generator for generating steam to be fed to the container;
a cooling section for cooling the steam coming from the container to contain the biological ingredient; and
a recovery container in which an aroma component-containing gas passing through without being condensed in the cooling section can be subjected to gas-liquid contact to recover the aroma component in a liquid.

12. A food or beverage comprising an aroma component recovered from a biological ingredient using steam distillation, wherein the food or beverage satisfies the requirement that the ratio of the GC area value of furfural to the GC area value of hexanoic acid ethyl ester be not less than 0.008 and not more than 0.039, and wherein the biological ingredient is a plum fruit or a lemon fruit.

13. A recovered liquid obtained by the method according to claim 10, the recovered liquid comprising furfural and hexanoic acid ethyl ester, wherein the recovered liquid satisfies the requirement that the ratio of the GC area value of furfural to the GC area value of hexanoic acid ethyl ester be not less than 0.008 and not more than 0.039.

## Patentansprüche

1. Ein Verfahren zur Gewinnung einer Aromakomponente aus einem biologischen Bestandteil, wobei das Verfahren die Schritte umfasst:
Zuführen von Dampf zu einem den biologischen Bestandteil enthaltenden Behälter, um den Dampf mit dem biologischen Bestandteil in Kontakt zu bringen;
Abkühlen des Dampfes, der aus dem den biologischen Bestandteil enthaltenden Behälter kommt; und
Leiten des abgekühlten Dampfes und einer durch Kühlung erzeugten Flüssigkeit zu einem Flüssigkeit enthaltenden Behälter, um die Aromakomponente zu gewinnen,
und ferner umfassend, vor dem Schritt des Zuführens von Dampf in den den biologischen Bestandteil enthaltenden Behälter, den Schritt des Eintauchens eines Teils oder des gesamten biologischen Bestandteils in einen Alkohol oder einen wasserhaltigen Alkohol,
wobei der Druck im Inneren des Behälters im Bereich von 450 bis 1013 hPa liegt.

2. Ein Verfahren zur Herstellung eines Getränks mit einem Aroma eines biologischen Bestandteils, wobei das Verfahren die Schritte umfasst:
Zuführen von Dampf zu einem den biologischen Bestandteil enthaltenden Behälter, um den Dampf mit dem biologischen Bestandteil in Kontakt zu bringen;
Abkühlen des Dampfes, der aus einem mit dem biologischen Bestandteil befüllten Abschnitt kommt;
Leiten des abgekühlten Dampfes und einer durch Abkühlung erzeugten Flüssigkeit zu einem Flüssigkeit enthaltenden Behälter, um die Aromakomponente zu gewinnen; und
Zugabe der erhaltenen Flüssigkeit, welche die Aromakomponente enthält, zu einem Getränk, und ferner umfassend, vor dem Schritt des Zuführens von Dampf in den den biologischen Bestandteil enthaltenden Behälter, den Schritt des Eintauchens eines Teils oder des gesamten biologischen Bestandteils in einen Alkohol oder einen wasserhaltigen Alkohol,
wobei der Druck im Inneren des Behälters im Bereich von 450 bis 1013 hPa liegt.

3. Das Verfahren gemäß Anspruch 1 oder 2, ferner umfassend, vor dem Schritt des Zuführens von Dampf in den Behälter, den Schritt des Eintauchens eines Teils oder der gesamten Oberfläche des biologischen Bestandteils in einen Alkohol, einen wasserhaltigen Alkohol oder Wasser.

4. Das Verfahren gemäß einem der Ansprüche 1 bis 3, wobei beim Schritt des Inkontaktbringens des Dampfes mit dem biologischen Bestandteil im Inneren des Behälters ein Teil oder die gesamte Oberfläche des biologischen Bestandteils in kondensiertes Wasser aus dem zugeführten Dampf getaucht ist.

5. Das Verfahren gemäß einem der Ansprüche 1 bis 4, wobei der Dampf dem Boden des den biologischen Bestandteil enthaltenden Behälters, zugeführt wird.

6. Das Verfahren gemäß einem der Ansprüche 1 bis 5, wobei der Dampf in einem Verhältnis von 0,2 bis 2,0 mL/min pro 100 g des biologischen Bestandteils zugeführt wird.

7. Das Verfahren gemäß einem der Ansprüche 1 bis 6, wobei die beim Schritt der Gewinnung der Aromakomponente verwendete Flüssigkeit ein Alkohol, ein wasserhaltiger Alkohol oder Wasser ist.

8. Das Verfahren gemäß Anspruch 7, wobei beim Schritt der Gewinnung der Aromakomponente die Aromakomponente durch Gas-Flüssigkeitskontakt gewonnen wird.

9. Das Verfahren gemäß einem der Ansprüche 1 bis 8, wobei der biologische Bestandteil eine Frucht ist.

10. Das Verfahren gemäß Anspruch 9, wobei die Frucht eine Pflaumen- oder Zitronenfrucht ist.

11. Eine Vorrichtung zur Gewinnung einer Aromakomponente aus einem biologischen Bestandteil, wobei die Vorrichtung umfasst:
einen Behälter, der den biologischen Bestandteil enthalten soll, wobei ein Teil oder der gesamte biologische Bestandteil in einen Alkohol oder einen wasserhaltigen Alkohol eingetaucht wurde, und
wobei der Druck im Inneren des Behälters im Bereich von 450 bis 1013 hPa liegt;
einen Dampferzeuger zum Erzeugen von Dampf, der dem Behälter zugeführt wird;
einen Kühlabschnitt zum Abkühlen des Dampfes, der aus dem Behälter kommt, der den biologischen Bestandteil enthalten soll; und
einen Gewinnungsbehälter, durch den ein aromakomponentenhaltiges Gas strömt, das ohne im Kühlabschnitt kondensiert zu werden, einem Gas-Flüssigkeitskontakt unterzogen werden kann, um die aromatische Komponente in einer Flüssigkeit zu gewinnen.

12. Ein Nahrungsmittel oder Getränk, umfassend eine Aromakomponente, die durch Dampfdestillation aus einem biologischen Bestandteil gewonnen wurde, wobei das Nahrungsmittel oder Getränk die Anforderung erfüllt, dass das Verhältnis des GC-Flächenwerts von Furfural zum GC-Flächenwert von Hexansäureethylester nicht weniger als 0,008 und nicht mehr als 0,039 beträgt, und wobei der biologische Bestandteil eine Pflaumen- oder Zitronenfrucht ist.

13. Eine gewonnene Flüssigkeit, die nach dem Verfahren gemäß Anspruch 10 erhalten wird, wobei die gewonnene Flüssigkeit Furfural und Hexansäureethylester umfasst, wobei die gewonnene Flüssigkeit die Anforderung erfüllt, dass das Verhältnis des GC-Flächenwerts von Furfural zum GC-Flächenwert von Hexansäureethylester nicht weniger als 0,008 und nicht mehr als 0,039 beträgt.

## Revendications

1. Procédé de récupération d'un constituant d'arôme à partir d'un ingrédient biologique, le procédé comprenant les étapes de :
introduction de vapeur dans un récipient contenant l'ingrédient biologique pour mettre la vapeur en contact avec l'ingrédient biologique ;
refroidissement de la vapeur provenant du récipient contenant l'ingrédient biologique ; et de
direction de la vapeur refroidie et d'un liquide produit par refroidissement dans un récipient contenant un liquide pour récupérer le constituant d'arôme,
et comprenant de plus, avant l'étape d'introduction de la vapeur dans le récipient contenant l'ingrédient biologique, l'étape d'immersion d'une partie ou de la totalité de l'ingrédient biologique dans un alcool ou un alcool hydraté,
dans lequel la pression à l'intérieur du récipient se trouve dans l'intervalle de 450 à 1 013 hpa.

2. Procédé de production d'une boisson présentant un arôme d'un ingrédient biologique, le procédé comprenant les étapes de :
introduction de vapeur dans un récipient contenant l'ingrédient biologique pour mettre la vapeur en contact avec l'ingrédient biologique ;
refroidissement de la vapeur provenant d'une section chargée avec l'ingrédient biologique ;
direction de la vapeur refroidie et d'un liquide produit par refroidissement dans un récipient contenant un liquide pour récupérer le constituant d'arôme ; et
addition du liquide contenant un constituant d'arôme obtenu à une boisson,
et de plus comprenant, avant l'étape d'introduction de la vapeur dans le récipient contenant l'ingrédient biologique, l'étape d'immersion d'une partie ou de la totalité de l'ingrédient biologique dans un alcool ou un alcool hydraté,
dans lequel la pression à l'intérieur du récipient se trouve dans l'intervalle de 450 à 1 013 hpa.

3. Procédé selon la revendication 1 ou 2, comprenant de plus, avant l'étape d'introduction de la vapeur dans le récipient, l'étape d'immersion d'une partie ou de la totalité de la surface de l'ingrédient biologique dans un alcool, un alcool hydraté, ou de l'eau.

4. Procédé selon l'une quelconque des revendications 1 à 3, dans lequel dans l'étape de mise en contact de la vapeur avec l'ingrédient biologique à l'intérieur du récipient, une partie ou la totalité de la surface de l'ingrédient biologique est immergée par de l'eau condensée à partir de la vapeur introduite.

5. Procédé selon l'une quelconque des revendications 1 à 4, dans lequel la vapeur est introduite au fond du récipient contenant l'ingrédient biologique.

6. Procédé selon l'une quelconque des revendications 1 à 5, dans lequel la vapeur est introduite à un débit de 0,2 à 2,0 ml/min pour 100 g de l'ingrédient biologique.

7. Procédé selon l'une quelconque des revendications 1 à 6, dans lequel le liquide utilisé dans l'étape de récupération de constituant d'arôme est un alcool, un alcool hydraté, ou de l'eau.

8. Procédé selon la revendication 7, dans lequel dans l'étape de récupération de constituant d'arôme, le constituant d'arôme est récupéré par contact gaz-liquide.

9. Procédé selon l'une quelconque des revendications 1 à 8, dans lequel l'ingrédient biologique est un fruit.

10. Procédé selon la revendication 9, dans lequel le fruit est un fruit de prune ou un fruit de citron.

11. Appareil de récupération d'un constituant d'arôme à partir d'un ingrédient biologique, l'appareil comprenant :
un récipient pour contenir l'ingrédient biologique, dans lequel une partie ou la totalité de l'ingrédient biologique a été immergée dans un alcool ou un alcool hydraté, et
dans lequel la pression à l'intérieur du récipient se trouve dans l'intervalle de 450 à 1 013 hpa ;
un générateur de vapeur pour générer de la vapeur à introduire dans le récipient ;
une section de refroidissement pour refroidir la vapeur provenant du récipient pour contenir l'ingrédient biologique ; et
un récipient de récupération dans lequel un gaz contenant un constituant d'arôme le traversant sans être condensé dans la section de refroidissement peut être soumis à un contact gaz-liquide pour récupérer le constituant d'arôme dans un liquide.

12. Aliment ou boisson comprenant un constituant d'arôme récupéré à partir d'un ingrédient biologique en utilisant une distillation à la vapeur, dans lequel l'aliment ou la boisson satisfait l'exigence consistant en ce que le rapport de la vapeur de surface GC de furfural à la valeur de surface GC d'hexanoate d'éthyle soit d'au moins 0,008 et d'au plus 0,039, et dans lequel l'ingrédient biologique est un fruit de prune ou un fruit de citron.

13. Liquide récupéré obtenu par le procédé selon la revendication 10, le liquide récupéré comprenant du furfural et de l'hexanoate d'éthyle, dans lequel le liquide récupéré satisfait l'exigence consistant en ce que le rapport de la valeur de surface GC de furfural à la valeur de surface GC d'hexanoate d'éthyle soit d'au moins 0,008 et d'au plus 0,039.
